# EUROPÄISCHE PATENTSCHRIFT

(11) **EP 2 562 058 B1**
(45) Veröffentlichungstag und Bekanntmachung des Hinweises auf die Patenterteilung: **25.03.2015**
(21) Anmeldenummer: 12179181.8
(22) Anmeldetag: 03.08.2012
(51) Int. Cl.: B60S 9/08

(54) **Modular aufgebaute Stützvorrichtung für einen Sattelanhänger und Sattelanhänger mit einer solchen Stützvorrichtung**
Modular support device for a semi-trailer and semi-trailer with such a support device
Dispositif d'appui monté de manière modulaire pour un semi-remorque et semi-remorque doté d'un tel dispositif d'appui

(30) Priorität: 24.08.2011 DE 102011081455
(43) Veröffentlichungstag der Anmeldung: 27.02.2013
(73) Patentinhaber: SAF-HOLLAND GmbH, 63856 Bessenbach (DE)
(72) Erfinder: Weber, Elmar, 48249 Dülmen (DE)
(74) Vertreter: Müller Schupfner & Partner Patent- und Rechtsanwaltspartnerschaft mbB

(56) Entgegenhaltungen:
- DE-U1-202006 012 472
- US-A- 3 182 956
- US-A- 3 861 648
- US-A- 5 542 647
- US-A1- 2003 183 033
- US-B1- 6 623 035

## Beschreibung

Die Erfindung betrifft eine Stützvorrichtung für einen Sattelanhänger bzw. Sattelauflieger oder dergleichen, einen Sattelanhänger mit wenigstens einer solchen Stützvorrichtung, sowie eine Betätigungseinrichtung und eine Getriebeeinrichtung zur Verwendung in einer solchen Stützvorrichtung.

Eine Stützvorrichtung der betreffenden Art dient der Abstützung eines Sattelanhängers, wenn dieser von der Sattelzugmaschine abgekoppelt ist, wobei für die Abstützung zumeist zwei Stützvorrichtungen (Stützenpaar) an einem Sattelanhänger verwendet werden. Eine solche Stützvorrichtung ist z. B. aus der DE 20 2006 012 472 U1 bekannt. Die vorbekannte Stützvorrichtung weist ein Außenstützrohr und ein Innenstützrohr auf, wobei das Innenstützrohr teleskopierbar im Außenstützrohr angeordnet ist und mittels eines im Inneren (d. h. im Rohrinneren) verbauten Spindelmechanismus in axialer Richtung relativ zum Außenstützrohr bewegt werden kann. Die Betätigung des Spindelmechanismus erfolgt durch eine im Inneren des Außenstützrohrs angeordnete Betätigungseinrichtung, mit der eine mittels Handkurbel oder dergleichen erzeugte Drehbewegung in eine Spindeldrehbewegung umgesetzt werden kann.

Die US-5,542,647, US-2003/0183033 A1 und US-3,861,648 offenbaren Stützvorrichtungen für Fahrzeuge, die ein Außenstützrohr und ein Innenstützrohr aufweisen, wobei das Innenstützrohr über einen Spindelmechanismus in dem Außenstützrohr verlagerbar ist, und wobei das Innenstützrohr an dem distalen Ende einen Stützfuß aufweist. Die US 5 542 647 beschreibt weiterhin den Gegenstand des Oberbegriffs des Anspruchs 1.

Nachteilig an der vorbekannten Stützvorrichtung ist ein verhältnismäßig hoher Bauaufwand, insbesondere auch im Hinblick darauf, dass häufig eine individuelle Anpassung an den jeweiligen Sattelanhänger erforderlich ist.

Es ist daher eine Aufgabe der vorliegenden Erfindung, eine Stützvorrichtung der eingangs genannten Art anzugeben, die sich mit geringem Bauaufwand herstellen lässt.

Diese Aufgabe wird gelöst mit einer erfindungsgemäßen Stützvorrichtung mit den Merkmalen des Anspruchs 1. Die vom Anspruch 1 abhängigen Ansprüche betreffen bevorzugte Ausgestaltungen und Weiterbildungen der erfindungsgemäßen Stützvorrichtung. Mit einem nebengeordneten Anspruch erstreckt sich die Lösung der Aufgabe auch auf einen Sattelanhänger, der wenigstens eine und bevorzugt zwei erfindungsgemäße Stützvorrichtungen, die zur gemeinsamen Betätigung auch durch eine Verbindungswelle miteinander verbunden sein können, aufweist. Mit zwei weiteren nebengeordneten Ansprüchen erstreckt sich die Lösung der Aufgabe auch auf eine als separate Baueinheit ausgebildete und im Wesentlichen verbaufertig bereitgestellte Betätigungseinrichtung sowie auf eine als separate Baueinheit ausgebildete und im Wesentlichen verbaufertig bereitgestellte Getriebeeinrichtung, die an einer erfindungsgemäßen Stützvorrichtung verwendet bzw. verbaut werden können. Die nachfolgenden Erläuterungen gelten analog für alle Erfindungsgegenstände.

Die erfindungsgemäße Stützvorrichtung weist ein gerades Außenstützrohr und ein gerades Innenstützrohr auf, wobei das Innenstützrohr teleskopierbar im Außenstützrohr angeordnet ist und mittels eines im Inneren verbauten Spindelmechanismus in axialer Richtung relativ zum Außenstützrohr bewegt werden kann. Es ist vorgesehen, dass die erfindungsgemäße Stützvorrichtung ferner eine Betätigungseinrichtung zur Betätigung des Spindelmechanismus aufweist, die als separate Baueinheit ausgebildet und die außerhalb des Außenstützrohrs angeordnet ist. Die Stützvorrichtung weist weiterhin eine Montageplatte auf, die zur Befestigung der Stützvorrichtung an dem Sattelanhänger ausgebildet ist und die obere Seite des Außenstützrohrs überragt, wobei der die obere Seite des Außenstützrohrs überragende Bereich der Montageplatte als Befestigungsbereich zur Festlegung der Betätigungseinrichtung an dem Außenstützrohr ausgebildet ist.

Der Erfindung liegt die Idee zugrunde, die Betätigungseinrichtung zur Betätigung des Spindelmechanismus nicht mehr im Außenstützrohr anzuordnen, was selbsterklärend mit einem gewissen Bauaufwand verbunden ist, sondern als separate Baueinheit bzw. als separates Baumodul bereit zu stellen. Die erfindungsgemäße Stützvorrichtung weist somit einen modularen Aufbau auf. Die als separate Baueinheit ausgebildete Betätigungseinrichtung zur Betätigung des Spindelmechanismus (nachfolgend auch nur als Betätigungseinrichtung bezeichnet) weist bevorzugt ein eigenes Gehäuse auf. Bei der Herstellung einer erfindungsgemäßen Stützvorrichtung können das Außenstützrohr und das Innenstützrohr individuell abgelängt werden. Nachfolgend können das Innenstützrohr, das Außenstützrohr, der Spindelmechanismus (bzw. dessen Einzelkomponenten) und die separate Betätigungseinrichtung für den Spindelmechanismus mit verhältnismäßig geringem Aufwand zusammengebaut werden.

Die Erfindung ermöglicht ferner die Schaffung eines nur wenige Komponenten umfassenden Baukastensystems, mit dem erfindungsgemäße Stützvorrichtungen flexibel bzw. bedarfsgerecht zusammengebaut werden können. Dieses Baukastensystem umfasst z. B. als Meterware bereitgestellte Außenstützrohre und Innenstützrohre (insbesondere mit einem Rechteckquerschnitt), Spindeln in verschiedenen Längen (und/oder ablängbare Spindeln) und als separate Baueinheit ausgebildete Betätigungseinrichtungen zur Betätigung des Spindelmechanismus, wobei verschiedene Bautypen solcher Betätigungseinrichtungen (bspw. mit oder ohne einem mehrgängigen Übersetzungsgetriebe, wie nachfolgend noch näher erläutert) umfasst sein können. Die gezielte Kombination dieser Komponenten ermöglicht das Herstellen von erfindungsgemäßen Stützvorrichtungen mit einer großen Variantenvielfalt.

Die als separate Baueinheit ausgebildete Betätigungseinrichtung zur Betätigung des Spindelmechanismus kann mit dem Außenstützrohr verbunden sein. Bevorzugt ist vorgesehen, dass die als separate Baueinheit ausgebildete Betätigungseinrichtung für den Spindelmechanismus direkt an der oberen Stirnseite oder einem oberen Bereich am Außenstützrohr befestigt, z. B. angeflanscht ist. Die obere Stirnseite ist die der unteren Stirnseite, aus der das teleskopierbare Innenstützrohr herausragt, gegenüberliegende Stirnseite. Die Betätigungseinrichtung kann mit dem Außenstützrohr verschraubt, verschweißt, vernietet und/oder verbördelt sein. Unter einer Verbördelung wird eine durch plastische Verformung herbeigeführte Verbindung verstanden. Ergänzend können Formschlusselemente, wie z. B. eine ineinandergreifende Verzahnung, vorgesehen sein. Eine Verbindung zwischen der Betätigungseinrichtung und dem Außenstützrohr erfolgt auch über eine am Außenstützrohr befindliche Montageplatte (zur Befestigung der erfindungsgemäßen Stützvorrichtung am Sattelanhänger). Hierbei überragt die Montageplatte die obere Seite bzw. Stirnseite des Außenstützrohres. Dieser überragende bzw. vorstehende Bereich der Montageplatte dient dann als Befestigungsbereich, an dem die Betätigungseinrichtung festgelegt werden kann. Ferner kann zwischen dem Außenstützrohr und der Betätigungseinrichtung ein Zwischenstück (bspw. ein Distanzrohr) angeordnet sein

Es ist vorgesehen, dass die als separate Baueinheit ausgebildete Betätigungseinrichtung zur Betätigung des Spindelmechanismus wenigstens eine Eingangswelle für eine Handkurbel und/oder einen Antriebsmotor aufweist, sowie ein Umsetzgetriebe, wie insbesondere ein Kegelradgetriebe, welches eine Drehbewegung an der Eingangswelle in eine Spindeldrehbewegung umsetzt.

Die als separate Baueinheit ausgebildete Betätigungseinrichtung zur Betätigung des Spindelmechanismus kann ein schaltbares mehrgängiges Übersetzungsgetriebe aufweisen. Ein solches schaltbares mehrgängiges Übersetzungsgetriebe ermöglicht z. B. einen so genannten Schnellgang und einen so genannten Lastgang, wozu im Weiteren auf die DE 20 2006 012 472 U1 verwiesen wird.

Besonders bevorzugt ist vorgesehen, dass die erfindungsgemäße Stützvorrichtung ferner eine Getriebeeinrichtung mit einem schaltbaren mehrgängigen Übersetzungsgetriebe aufweist, die als separate Baueinheit ausgebildet und die an die separat ausgebildete Betätigungseinrichtung angeflanscht ist. Bevorzugt ist diese Getriebeeinrichtung zwischen der separat ausgebildeten Betätigungseinrichtung und dem Außenstützrohr angeordnet. Bevorzugt weist eine solche als separate Baueinheit ausgebildete Getriebeeinrichtung ein eigenes Gehäuse auf. Insbesondere ist vorgesehen, dass die als separate Baueinheit ausgebildete Betätigungseinrichtung und das als separate Baueinheit ausgebildete Übersetzungsgetriebe mittels ihrer Gehäuse direkt miteinander verflanscht sind. Die Verbindung kann durch Verschrauben, Verschweißen, Vernieten und/oder Verbördeln erzielt werden. Ergänzend können Formschlusselemente, wie z. B. eine ineinandergreifende Verzahnung, vorgesehen sein.

Der Spindelmechanismus der erfindungsgemäßen Stützvorrichtung umfasst eine Spindel, die bevorzugt von unten in die als separates Bauteil ausgebildete Betätigungseinrichtung oder in die als separates Bauteil ausgebildete Getriebeeinrichtung eingeführt bzw. eingesteckt ist und mit wenigstens einem dort angeordneten (zur Betätigungseinrichtung oder Getriebeeinrichtung gehörenden) Wälzlager in axialer Richtung und/oder in radialer Richtung abgestützt ist.

Die Erfindung wird nachfolgend anhand der Figuren beispielhaft und in nicht einschränkender Weise näher erläutert.
- Fig. 1: zeigt eine erfindungsgemäße Stützvorrichtung in einer Vorderansicht.
- Fig. 2: zeigt die Stützvorrichtung aus Fig. 1 in einer Seitenansicht.
- Fig. 3: zeigt die Stützvorrichtung aus Fig. 1 in einer schematischen Schnittansicht.
- Fig. 4: zeigt eine weitere Ausführungsmöglichkeit einer erfindungsgemäßen Stützvorrichtung in einer Seitenansicht.

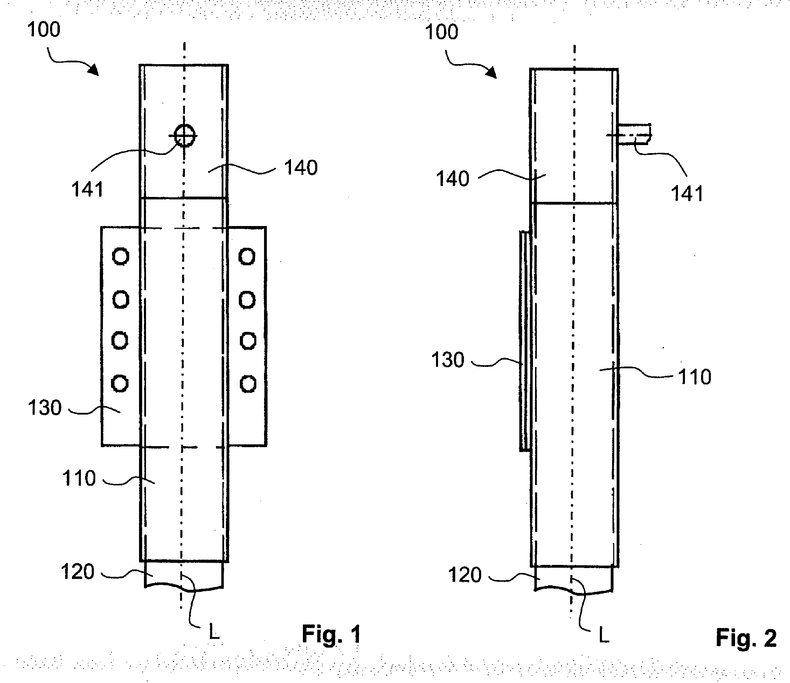

Die Fig. 1 und 2 zeigen eine erfindungsgemäße Stützvorrichtung 100 für einen Sattelanhänger oder dergleichen. Die Stützvorrichtung 100 umfasst ein Außenstützrohr 110 in dem teleskopierbar bzw. längsverschieblich ein Innenstützrohr 120 angeordnet ist, das an der unteren Stirnseite aus dem Außenstützrohr 110 herausragt. Das Außenstützrohr 110 und das Innstützrohr 120 sind mit quadratischem Querschnitt ausgebildet. Am unteren Ende des Innenstützrohrs 120 ist ein nicht dargestellter Stützfuß oder Ausgleichsfuß befestigt. Mit 130 ist eine Montageplatte bzw. Anschraubplatte bezeichnet, mit der die Stützvorrichtung 100 am Rahmen eines Sattelanhängers festgeschraubt werden kann. Die Montagplatte 130 ist bspw. mit dem Außenstützrohr 110 verschweißt.

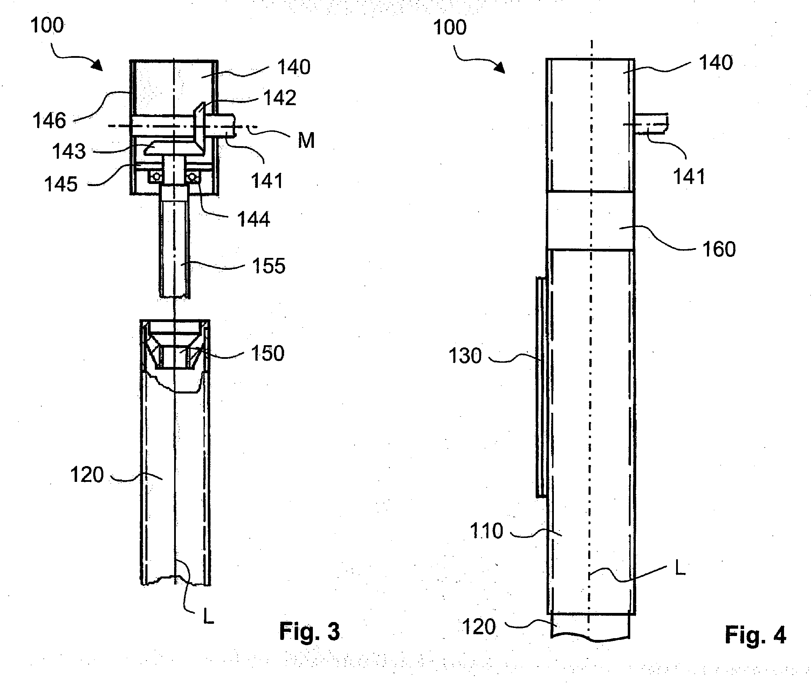

Um das Innenstützrohr 120 entlang der Längsachse L relativ zum Außenstützrohr 110 bewegen zu können, befindet sich im Inneren ein Spindelmechanismus, wie nachfolgend im Zusammenhang mit Fig. 3 noch näher erläutert. Zur Betätigung dieses Spindelmechanismus ist eine Betätigungseinrichtung 140 vorgesehen, die als separate Baueinheit ausgebildet ist und direkt an der oberen Stirnseite des Außenstützrohrs 110 axial fluchtend angeflanscht und fest mit dem Außenstützrohr 110 verbunden ist. Bevorzugt ist vorgesehen, dass diese Betätigungseinrichtung 140 als verbaufertige Baueinheit bzw. Komponente bereitgestellt wird, die z. B. auch bereits lackiert sein kann. Hierfür kann die Betätigungseinrichtung 140 ein eigenes Gehäuse aufweisen.

Fig. 3 veranschaulicht die Funktion des Spindelmechanismus und den Aufbau der Betätigungseinrichtung 140 zur Betätigung dieses Spindelmechanismus. Das Außenstützrohr 110 ist nicht dargestellt. Der Spindelmechanismus umfasst eine Spindelmutter 150, die fest oder schwimmend am oberen axialen Ende im Innenstützrohr 120 angeordnet ist, und eine Spindel 155 (bspw. mit einem Trapez-Bewegungsgewinde), die in die Spindelmutter 150 eingreift (der Eingriff ist nicht dargestellt) und die an ihrem oberen axialen Ende an der Betätigungseinrichtung 140 befestigt ist. In bekannter Weise kann durch Drehen der Spindel 155 (um die Längsachse L) das Innenstützrohr 120 entlang der Längsachse L relativ zum Außenstützrohr 110 bewegt werden. Abhängig von der Drehrichtung wird hierbei das Innenstützrohr 120 in das Außenstützrohr 110 eingefahren oder aus dem Außenstützrohr 110 ausgefahren.

Die Betätigungseinrichtung 140 umfasst eine Eingangswelle 141 für eine Handkurbel oder einen Antriebsmotor. Die Längs- bzw. Drehachse M der Eingangswelle 141 erstreckt sich senkrecht zur Längs- bzw. Drehachse L der Spindel 155. Auf der Eingangswelle 141 ist drehfest ein erstes Kegelrad 142 angeordnet, das mit seiner Verzahnung in ein zweites Kegelrad 143 eingreift, wobei das zweite Kegelrad 143 drehfest mit der Spindel 155 verbunden ist. Das erste (antreibende) Kegelrad 142 und das zweite (angetriebene) Kegelrad 143 bilden ein Kegelradgetriebe, welches eine Drehbewegung an der Eingangswelle 141 in eine Drehbewegung der Spindel 155 bzw. in eine Spindeldrehbewegung umsetzt.

Die Spindel 155 ist von unten in die Betätigungseinrichtung 140 eingesteckt und direkt oder indirekt mit dem zweiten Kegelrad 143 drehfest verbunden. Zur axialen und/oder radialen Abstützung des oberen axialen Endes der Spindel 155 ist ein Wälzlager 144 vorgesehen. Damit ist die obere Spindellagerung in die Betätigungseinrichtung 140 integriert. Mit 145 und 146 sind eine Träger- bzw. Abstützplatte und ein Gehäuse bzw. eine Ummantelung bezeichnet. Die Betätigungseinrichtung 140 kann ein integriertes schaltbares mehrgängiges Übersetzungsgetriebe aufweisen, wie obenstehend erläutert.

Fig. 4 zeigt eine alternative Ausführungsmöglichkeit einer erfindungsgemäßen Stützvorrichtung mit einer Getriebeeinrichtung 160, die ein schaltbares mehrgängiges Übersetzungsgetriebe aufweist (siehe hierzu die entsprechenden obenstehenden Erläuterungen). Die Getriebeeinrichtung 160 ist ebenfalls als separate Baueinheit ausgebildet und fluchtend zwischen der separat ausgebildeten Betätigungseinrichtung 140 und dem Außenstützrohr 110 eingebunden. Alternativ zu der gezeigten Anordnung könnte die Getriebeeinrichtung 160 bspw. auch seitlich an der Betätigungseinrichtung 140 angeflanscht sein.

## Patentansprüche

1. Stützvorrichtung (100) für einen Sattelanhänger oder dergleichen, umfassend ein Außenstützrohr (110) und ein Innenstützrohr (120),
wobei das Innenstützrohr (120) teleskopierbar im Außenstützrohr (110) angeordnet ist und mittels eines im Inneren verbauten Spindelmechanismus in axialer Richtung (L) relativ zum Außenstützrohr (110) verlagert werden kann,und
wobei eine Betätigungseinrichtung (140) mit einem Kegelradgetriebe (142,143), welches eine Rotation an einer Eingangswelle (141) für eine Handkurbel und/oder einen Antriebsmotor in eine Spindelrotation umsetzt, zur Betätigung des Spindelmechanismus vorgesehen ist, die als separate Baueinheit ausgebildet und außerhalb des Außenstützrohrs (110) angeordnet ist,
gekennzeichnet durch
eine Montageplatte (130), die zur Befestigung der Stützvorrichtung an dem Sattelanhänger ausgebildet ist und die obere Seite des Außenstützrohrs (110) überragt, wobei der die obere Seite des Außenstützrohres (110) überragende Bereich der Montageplatte als Befestigungsbereich zur Festlegung der Betätigungseinrichtung (140) an dem Außenstützrohr (110) ausgebildet ist.

2. Stützvorrichtung (100) nach Anspruch 1, wobei die Betätigungseinrichtung (140) zur Betätigung des Spindelmechanismus direkt an der oberen Stirnseite des Außenstützrohrs (110) angeordnet, vorzugsweise angeflanscht, ist.

3. Stützvorrichtung (100) nach einem der vorhergehenden Ansprüche, wobei die Betätigungseinrichtung (140) zur Betätigung des Spindelmechanismus mit dem Außenstützrohr (110) verschraubt, verschweißt, vernietet und/oder verbördelt ist.

4. Stützvorrichtung (100) nach einem der vorhergehenden Ansprüche, wobei die Betätigungseinrichtung (140) zur Betätigung des Spindelmechanismus eine Eingangswelle (141) für eine Handkurbel und/oder einen Antriebsmotor aufweist, sowie ein Kegelradgetriebe (142, 143).

5. Stützvorrichtung (100) nach einem der vorhergehenden Ansprüche, wobei die Betätigungseinrichtung (140) zur Betätigung des Spindelmechanismus ein schaltbares mehrgängiges Übersetzungsgetriebe aufweist.

6. Stützvorrichtung (100) nach einem der vorhergehenden Ansprüche, wobei diese Stützvorrichtung (100) ferner eine Getriebeeinrichtung (160) mit einem schaltbaren mehrgängigen Übersetzungsgetriebe aufweist, die als separate Baueinheit ausgebildet und an die separat ausgebildete Betätigungseinrichtung (140) angeflanscht ist.

7. Stützvorrichtung (100) nach einem der vorhergehenden Ansprüche, wobei die Spindel (155) des Spindelmechanismus von unten in die Betätigungseinrichtung (140) oder in die Getriebeeinrichtung (160) eingeführt und mit wenigstens einem dort angeordneten Wälzlager (144) abgestützt ist.

8. Sattelanhänger, umfassend wenigstens eine Stützvorrichtung (100) gemäß einem der vorausgehenden Ansprüche 1 bis 7.

## Claims

1. A supporting device (100) for a semi-trailer or the like, comprising an outer supporting tube (110) and an inner supporting tube (120),
wherein the inner supporting tube (120) is telescopically arranged in the outer supporting tube (110) and may be moved or shifted in the axial direction (L) relative to the outer supporting tube (110) by means of a spindle mechanism mounted inside, and
wherein there is provided an actuating device (140) with a bevel gearing (142,143), which converts a rotation on the input shaft (141) for a hand crank and/or a drive motor into a rotation of the spindle, for actuating the spindle mechanism, which actuating device is configured as a separate structural unit and arranged outside of the outer supporting tube (110),
**characterized by**
a mounting plate (130), which is configured for attaching the supporting device at the semi-trailer and which protrudes or extends beyond the upper side of the outer supporting tube (110), wherein the portion of the mounting plate extending beyond the upper side of the outer supporting tube (110) is preferably configured as a fastening portion for fixing the actuating device (140) on the outer supporting tube (110).

2. The supporting device (100) of claim 1, wherein the actuating device (140) for actuating the spindle mechanism is arranged, preferably flanged, directly at the upper end face of the outer supporting tube (110).

3. The supporting device (100) of any one of the preceding claims, wherein the actuating device (140) for actuating the spindle mechanism is screwed/bolted, welded, riveted and/or crimped to the outer supporting tube (110).

4. The supporting device (100) of any one of the preceding claims, wherein the actuating device (140) for actuating the spindle mechanism comprises an input shaft (141) for a hand crank and/or a drive motor as well as a bevel gearing (142, 143).

5. The supporting device (100) of any one of the preceding claims, wherein the actuating device (140) for actuating the spindle mechanism comprises a shiftable multi-speed step-up gear unit.

6. The supporting device (100) of any one of the preceding claims, wherein said supporting device (100) further comprises a transmission device (160) with a shiftable multi-speed step-up gear unit, which is configured as a separate structural unit and to which the separately configured actuating device (140) is flanged.

7. The supporting device (100) of any one of the preceding claims, wherein the spindle (155) of the spindle mechanism is inserted from the bottom into the actuating device (140) or into the transmission device (160) and is supported by at least one rolling contact bearing (144) arranged there.

8. A semi-trailer, comprising at least one supporting device (100) according to any one of the preceding claims 1 to 7.

## Revendications

1. Dispositif de soutien (100) pour un semi-remorque ou similaire, comprenant un tube de soutien extérieur (110) et un tube de soutien intérieur (120),
dans lequel le tube de soutien intérieur (120) est agencé de manière télescopique dans le tube de soutien extérieur (110) et peut être déplacé en direction axiale (L) par rapport au tube de soutien extérieur (110) au moyen d'un mécanisme à broche monté à l'intérieur, et
dans lequel il est prévu un moyen d'actionnement (140) avec un mécanisme à engrenages coniques (142, 143) qui convertit une rotation d'un arbre d'entrée (141) pour une manivelle à main et/ou un moteur d'entraînement, en une rotation de la broche pour actionner le mécanisme à broche, moyen d'actionnement qui est réalisé sous forme d'unité structurelle séparée et qui est agencé à l'extérieur du tube de soutien extérieur (110),
**caractérisé par**
une plaque de montage (130), qui est réalisée pour la fixation du dispositif de soutien sur le semi-remorque et qui dépasse du côté supérieur du tube de soutien extérieur (116), dans lequel la région, qui dépasse du côté supérieur du tube de soutien extérieur (110), de la plaque de montage est réalisée comme zone de fixation pour l'immobilisation du moyen d'actionnement (140) sur le tube de soutien extérieur (110).

2. Dispositif de soutien (100) selon la revendication 1, dans lequel le moyen d'actionnement (140) pour l'actionnement du mécanisme à broche est agencé directement sur la face frontale supérieure du tube de soutien extérieur (110), de préférence bridé.

3. Dispositif de soutien (100) selon l'une des revendications précédentes, dans lequel le moyen d'actionnement (140) pour l'actionnement du mécanisme à broche est vissé, soudé, riveté et/ou serti avec le tube de soutien extérieur (110).

4. Dispositif de soutien (100) selon l'une des revendications précédentes, dans lequel le moyen d'actionnement (140) pour l'actionnement du mécanisme à broche comprend un arbre d'entrée (141) pour une manivelle à main et/ou un moteur d'entraînement, ainsi qu'un mécanisme à engrenages coniques (142, 143).

5. Dispositif de soutien (100) selon l'une des revendications précédentes, dans lequel le moyen d'actionnement (140) pour l'actionnement du mécanisme à broche comprend un mécanisme démultiplicateur commutable à plusieurs vitesses.

6. Dispositif de soutien (100) selon l'une des revendications précédentes, dans lequel le dispositif de soutien (100) comprend en outre un moyen de transmission (160) avec un mécanisme démultiplicateur commutable à plusieurs vitesses, qui est réalisé sous forme d'unité structurelle séparée et qui est bridé sur le moyen d'actionnement (140) réalisé séparément.

7. Dispositif de soutien (100) selon l'une des revendications précédentes, dans lequel la broche (155) du mécanisme à broche est introduite depuis le bas dans le moyen d'actionnement (140) ou dans le moyen de transmission (160) et est soutenue par au moins un palier à roulement (144) agencé à cet endroit.

8. Semi-remorque comprenant au moins un dispositif de soutien (100) selon l'une des revendications précédentes 1 à 7.
